# EUROPÄISCHE PATENTANMELDUNG

(11) **EP 3 367 133 A1**
(43) Veröffentlichungstag der Anmeldung: **29.08.2018**
(21) Anmeldenummer: 18158166.1
(22) Anmeldetag: 22.02.2018
(51) Int. Cl.: G01S 19/23, G01S 19/22

(54) **VERFAHREN ZUM KALIBRIEREN EINER GNSS-ANTENNE EINES FAHRZEUGES**

(30) Priorität: 24.02.2017 DE 102017103894
(71) Anmelder: Geo++ GmbH, 30827 Garbsen (DE)
(72) Erfinder: Wübbena, Gerhard, 30823 Garbsen (DE)
(74) Vertreter: Gramm, Lins & Partner Patent- und Rechtsanwälte PartGmbB

(57) **Zusammenfassung**

Die Erfindung betrifft ein Verfahren zum Kalibrieren einer GNSS-Antenne eines Fahrzeuges, wobei ein Kalibrierprozess durchgeführt wird, bei dem das Fahrzeug derart bewegt wird, dass sich die horizontale und/oder vertikale Orientierung des Fahrzeuges ändert, wobei für verschiedene horizontale und/oder vertikale Orientierungen jeweils eine elevations- und azimutabhängige Fehlerkorrektur der GNSS-Antenne ermittelt wird.

## Beschreibung

Die Erfindung betrifft ein Verfahren zum Kalibrieren einer GNSS-Antenne eines Fahrzeuges. Die Erfindung betrifft ebenso ein Verfahren zur Bestimmung der Position eines Fahrzeuges mittels einer GNSS-Antenne, die mit dem erfindungsgemäßen Verfahren kalibriert wurde.

Mit der Entwicklung der Satellitennavigationssysteme (GNSS: Global Navigation Satelite System), wie beispielsweise GPS, Galileo oder Glonass, wurde die Möglichkeit geschaffen, die Position von mobilen Vorrichtungen, wie beispielsweise Fahrzeugen oder elektronischen Handgeräten, überall auf der Welt sehr genau ermitteln zu können. Erst hierdurch werden Anwendungsfälle wie eine automatische Routennavigation oder das autonome Fahren möglich, da eine zuverlässige und genaue Positionsermittlung der Fahrzeuge eine wesentliche Grundvoraussetzung für derartige Technologien ist.

Bei einem Satellitennavigationssystem befindet sich eine Vielzahl von Satelliten in einer vorgegebenen Umlaufbahn um die Erde und senden dabei kontinuierlich entsprechende Positionssignale (GNSS-Signale) aus, die von einem Signalempfänger (GNSS-Empfänger) empfangen werden können. Ein solcher Signalempfänger weist dabei eine GNSS-Antenne auf, um die funkbasierten Positionssignale empfangbar zu machen. Aus der Berechnung der Signallaufzeit der einzelnen empfangenen GNSS-Signale lässt sich dann die Entfernung vom GNSS-Empfänger zum jeweiligen GNSS-Satelliten berechnen, so dass bei einer hinreichenden Anzahl von Satelliten (hinreichende Genauigkeit mit vier Satelliten) und deren jeweilige berechneten Entfernung zum GNSS-Empfänger (unter Kenntnis der aktuellen Position der jeweiligen GNSS-Satelliten auf ihren Umlaufbahnen) dann die Position des GNSS-Empfängers durch Berechnen des Schnittpunktes der durch die Entfernungsmessung aufgespannten Kugeln um den jeweiligen Satelliten herum ermittelt werden kann.

Die Genauigkeit bei der Positionsermittlung hängt dabei von drei Faktoren ab. Zum einen existieren satellitenbedingte Fehler, die ihren Ursprung im Satellitenkontext selber haben. Dies sind beispielsweise Uhrenfehler der Satelliten oder Bahnfehler des Satelliten auf seiner Umlaufbahn. Zum anderen existieren signalbedingte Fehler, die ihren Ursprung in der Durchquerung der Signale durch die Sphären der Erde, wie beispielsweise die Ionosphäre, haben. So ist es beispielsweise bekannt, dass beim Durchqueren eines GNSS-Signales durch die Tropo- und Ionosphäre die GNSS-Signale hinsichtlich ihrer Signalgeschwindigkeit (Laufzeit der Signale) beeinflusst werden, wodurch sich bei der Laufzeitberechnung basierend auf einem festen Wert der Signalgeschwindigkeit ein Genauigkeitsfehler ergibt. Schließlich hängt die Genauigkeit bei der Ermittlung der Position auch von einem antennenbedingten Fehler ab, der sich aus der Wechselbeziehung der Antenne mit anderen, störenden Einflüssen um die Antenne herum ergibt sowie durch die Antenne selbst bedingt ist.

Antennenbedingte Fehler führen bei der GNSS-Positionsermittlung zu einem Fehler der GNSS-Entfernungsmessung (Pseudoranges und Phasenranges), die jedoch unter Kenntnis dieser systematischen Antennenfehler korrigiert werden kann, wodurch der antennenbedingte Positionsfehler eliminiert oder zumindest reduziert wird. Fehler in den Entfernungsmessungen von GNSS-Satelliten zu GNSS-Antennen führen besonders dann zu starken Positionsfehlern, wenn die Fehler systematisch von der Satellitenposition relativ zu der Empfangsantenne (charakterisiert durch den Höhenwinkel Elevation und den Horizontalwinkel Azimut) abhängen. In der genauen GNSS-Positionierung wird deshalb routinemäßig eine elevations- und azimutabhängige Korrektur der Phasenmessung (Phasenranges) angebracht, die durch Kalibrierung der verwendeten GNSS-Antenne in speziell ausgelegten Einrichtungen erstellt wurde. Das Anbringen von Korrekturen an die Codemessungen (Pseudoranges) erfolgt hingegen typischerweise nicht.

Diese Kalibrierungen werden für spezielle geodätische Antennen durchgeführt, die im Idealfall von störenden Objekten, die durch Mehrwegeffekte oder elektromagnetische Kopplung Störungen verursachen können, weit entfernt sind.

Auf Fahrzeugen, wie beispielsweise Kraftfahrzeugen oder Schienenfahrzeugen, sind hingegen die GNSS-Antennen meist unmittelbar an oder in der Außenhülle des Fahrzeuges angebracht, wodurch sich große, meist metallische Objekte im geringen Abstand zu den eigentlichen Antennen befinden (groß und gering beziehen sich auf den Vergleich mit den typischen GNSS-Wellenlängen von 19 cm bis 26 cm). Diese Objekten koppeln daher stark mit der verbauten GNSS-Antenne und können entsprechend große elevations- und azimutabhängige Fehler sowohl für die Phasen- als auch für die Codemessungen bewirken, und zwar auch dann, wenn die GNSS-Antenne zuvor in einer speziellen Einrichtung außerhalb des Fahrzeuges kalibriert wurde.

Aus der DE 10 2008 045 618 A1 ist ein Verfahren und eine Vorrichtung zur Kalibrierung von Sensoren an ein Fahrzeug bekannt, wobei Sensorpositionsdaten des zu kalibrierenden Sensors einerseits und Modellpositionsdaten hierzu ermittelt werden. Durch einen Vergleich zwischen den modellbasierten Sensorpositionen und den durch den Sensor gemessenen Sensorpositionen kann dann der Sensor entsprechend kalibriert werden. Die modellbasierten Sensorpositionen werden dabei basierend auf anderen Sensordaten ermittelt.

Aus Zeimetz, P. et al. "Berücksichtigung von Antennenkorrekturen bei GNSS-Anwendungen" in: DVW-Merkblatt, Wißner-Verlag, Augsburg, 2011, 01-2011, S. 1-10, sind Hinweise bezüglich der Antennenkorrektur für GNSS-Anwendungen beschrieben. Hierbei wird unter anderem offenbart, dass neben Laborkalibrierungen auch Antennenkalibrierungen im Feld durchgeführt werden können, wobei hierfür die Antennen gedreht und ggf. übergekippt werden, um eine Antennenkorrektur zu berechnen.

Aus Bilich, A., Mader, G.L., "GNSS Absoulte Antenna Calibration at the National Geodetic Survey, Proceedings of the 23rd International Technical Meeting of The Satellite Division of the Institute of Navigation (ION GNSS 2010), Portland, OR, September 2010, pp. 1369-1377, ist ein Verfahren zur absoluten GNSS-Antennenkalibrierung bekannt, wobei die Antenne hier an einem Roboterarm montiert und während der Messung bewegt wird, um die entsprechenden Phasenzentrumsvariationen zu bestimmen.

Es ist daher Aufgabe der vorliegenden Erfindung ein verbessertes Verfahren zum Kalibrieren und ein verbessertes Verfahren zum Bestimmen der Position mittels einer GNSS-Antenne bereitzustellen, mit denen die störenden Einflüsse eines Fahrzeuges auf die fest verbaute GNSS-Antenne durch Anbringen der Kalibrierung bei der Positionsbestimmung eliminiert werden können.

Die Aufgabe wird mit dem Verfahren gemäß Anspruch 1 sowie dem Verfahren gemäß Anspruch 8 und der Vorrichtung gemäß Anspruch 10 erfindungsgemäß gelöst.

Gemäß Anspruch 1 wird ein Verfahren zum Kalibrieren einer GNSS-Antenne eines Fahrzeuges vorgeschlagen, wobei zunächst ein Fahrzeug bereitgestellt wird, welches eine fahrzeugbezogene GNSS-Einrichtung mit einer in dem Fahrzeug fest eingebauten GNSS-Antenne aufweist. Die GNSS-Antenne kann dabei derart fest eingebaut sein, dass die GNSS-Antenne in oder an der Außenhülle des Fahrzeuges angebracht ist. Fest eingebaut meint hierbei, dass die Position der GNSS-Antenne relativ zu dem Fahrzeug nicht veränderbar ist, so dass eine Bewegung der GNSS-Antenne relativ zu einem Satelliten nur durch eine Bewegung des Fahrzeuges selber möglich ist.

Fahrzeuge im Sinne der vorliegenden Erfindung können dabei jedwede Arten von Fahrzeugen sein, die insbesondere zum Transport von Menschen und Material vorgesehen sind. Fahrzeuge im Sinne der vorliegenden Erfindung sind insbesondere Straßenfahrzeuge, wie beispielsweise PKWs, LKWs oder Motorräder. Fahrzeuge im Sinne der vorliegenden Erfindung können aber auch Schienenfahrzeuge, wie beispielsweise Lokomotiven, Schiffe und/oder Flugzeuge sein.

Erfindungsgemäß wird ein Kalibrierprozess durchgeführt, um die in dem Fahrzeug fest eingebaute GNSS-Antenne zu kalibrieren. Der Prozessschritt des Kalibrierens ist dabei ein Messprozess zur zuverlässig reproduzierbaren Feststellung und Dokumentation der Abweichung der GNSS-Antenne. Das Ergebnis des Kalibrierprozesses ist dabei ein Datensatz, der eine Vielzahl von Fehlerkorrekturen (für verschiedene Höhen- und Horizontalwinkel) enthält, um je nach Anwendungsfall den antennenbedingten und systematischen Fehler der GNSS-Antenne bei der GNSS-Positionierung eliminieren oder reduzieren zu können.

Während des Kalibrierprozesses wird dabei das Fahrzeug bewegt, so dass sich die horizontale und/oder vertikale Orientierung des Fahrzeuges ändert, wobei für unterschiedliche horizontale und/oder vertikale Orientierungen des Fahrzeuges jeweils eine elevations- und azimutabhängige Fehlerkorrektur der GNSS-Antenne in Abhängigkeit von in der jeweiligen horizontalen und/oder vertikalen Orientierung des Fahrzeuges empfangenen GNSS-Signalen eines GNSS-Satelliten durch eine Recheneinheit berechnet wird, um einen antennenbedingten elevations- und azimutabhängigen Fehler bei der GNSS-Positionsermittlung korrigieren zu können.

Kerngedanke der vorliegenden Erfindung ist es dabei, das Fahrzeug als Gesamtes als erweiterte Antenne zu betrachten und eine Kalibrierung dieses gesamten Fahrzeuges vorzunehmen und dann bei der GNSS-Positionierung des Fahrzeuges diese Kalibrierung zur Fehlerkorrektur an der GNSS-Antenne anzubringen.

Um für verschiedene Höhen- und Horizontalwinkel zwischen Satellit und GNSS-Antenne eine entsprechende Fehlerkorrektur zu ermitteln und hinterlegen zu können, wird das gesamte Fahrzeug mit seiner fest verbauten GNSS-Antenne so bewegt, dass es verschiedene horizontale und/oder vertikale Orientierungen einnimmt, wobei für entsprechende horizontale und/oder vertikale Orientierungen dann eine entsprechende Kalibrierung durchgeführt wird, so dass sich jeweils eine elevations- und azimutabhängige Fehlerkorrektur für die sich aus der entsprechenden horizontalen und/oder vertikalen Orientierung ergebenden Höhen- und Horizontalwinkel zwischen GNSS-Antenne und Satellit ergibt. Das Ermitteln der elevations- und azimutabhängigen Fehlerkorrektur kann dabei anhand bekannter Kalibrierverfahren von GNSS-Antennen erfolgen, so wie dies beispielsweise für reine GNSS-Antennen an sich bewegenden Robotern durchgeführt wird.

Als Ergebnis liegen dann für verschiedene Höhen- und Horizontalwinkel jeweils elevations- und azimutabhängige Fehlerkorrekturen der GNSS-Antenne vor, so dass unter Kenntnis der horizontalen und/oder vertikalen Orientierung des Fahrzeuges und der jeweiligen Position des Satelliten ein Höhenwinkel und ein Horizontalwinkel ermittelt werden kann, auf dessen Basis dann die entsprechende zuvor ermittelte elevations- und azimutabhängige Fehlerkorrektur bei der GNSS-Positionierung angebracht werden kann.

In einer vorteilhaften Ausführungsform wird durch die Recheneinheit dabei eine elevations- und azimutabhängige Fehlerkorrektur für die Phasenmessung und/oder Codemessung bei der GNSS-Positionsermittlung berechnet, so dass bei der Phasenmessung und/oder Codemessung die entsprechende elevations- und azimutabhängige Fehlerkorrektur angebracht und somit die entsprechende Entfernungsmessung korrigiert werden kann.

In einer weiteren vorteilhaften Ausführungsform wird das Fahrzeug auf eine bewegbare Plattform fest montiert und dann mittels der bewegbaren Plattform bewegt, wobei die sich bewegende Plattform so ausgebildet sein kann, dass das Fahrzeug so bewegt wird, dass sich entweder nur die horizontale Orientierung ändert, nur die vertikale Orientierung des Fahrzeuges ändert, oder sowohl die horizontale als auch die vertikale Orientierung des Fahrzeuges verändert werden kann.

Im einfachsten Fall handelt es sich bei der bewegbaren Plattform um eine sich drehende Plattform, mit der lediglich die horizontale Orientierung des Fahrzeuges durch eine Drehung um die eigene Achse verändert wird. Wird das Fahrzeug für einen gewissen Zeitraum, beispielsweise für mehrere Stunden (vorzugsweise 4 bis 8 Stunden) um die eigene Achse mit Hilfe der Plattform gedreht, so ändert sich über die Zeit in Bezug auf den Satelliten nicht nur der Horizontalwinkel aufgrund der Drehung des Fahrzeuges um die eigene Achse, sondern auch der Höhenwinkel, da sich GNSS-Satelliten über den Zeitraum hinweg auf einer Umlaufbahn um die Erde bewegen und damit gegenüber dem Fahrzeug eine relative Bewegung ausführen, die zu einer Änderung des Höhenwinkels führt. Diese relative Bewegung der Satelliten auf ihrer Umlaufbahn führt dabei ohne Veränderung der vertikalen Orientierung des Fahrzeuges zu einer Änderung des Höhenwinkels über die Zeit, so dass über den Kalibrierzeitraum hinweg durch die Drehung des Fahrzeuges um die eigene Achse eine vollständige elevations- und azimutabhängige Fehlerkorrektur der GNSS-Antenne ermittelt werden kann. Denn in dieser Zeit werden für verschiedene Höhen- und Horizontalwinkel jeweils entsprechende GNSS-Signale empfangen, auf deren Basis dann für den jeweiligen Höhen- und Horizontalwinkel eine elevations- und azimutabhängige Fehlerkorrektur berechnet werden kann.

In einer weiteren vorteilhaften Ausführungsform kann das Fahrzeug auch entlang eines vorbestimmten Pfades bewegt werden, beispielsweise indem über einen gewissen Zeitraum hinweg vordefinierte Bewegungsmuster abgefahren werden. Solche Bewegungsmuster können beispielsweise Kreise oder Achten sein, entlang dessen das Fahrzeug für mehrere Stunden bewegt wird, wodurch auch hier für verschiedene Höhenwinkel und für verschiedene Horizontalwinkel jeweils elevations- und azimutabhängige Fehlerkorrekturen ermittelt werden können.

In einer weiteren vorteilhaften Ausführungsform ist es schließlich auch denkbar, dass das Fahrzeug entlang eines unbestimmten Pfades bewegt wird, was beispielsweise durch eine Testfahrt oder im normalen Betrieb stattfinden kann. Allerdings würde in diesem Ausführungsbeispiel der Kalibrierprozess deutlich länger dauern, da nicht im Vorhinein klar definiert ist, dass die GNSS-Antenne sämtliche Höhen- und Horizontalwinkel gegenüber dem Satelliten einnehmen wird, so dass hier nicht vollständig sichergestellt sein kann, dass für sämtliche Höhen- und Horizontalwinkel auch jeweils eine elevations- und azimutabhängige Fehlerkorrektur vorliegt. Des Weiteren ist es in diesem Falle zu bevorzugen, dass ein großräumiger Korrekturdatendienst verwendet wird, um insbesondere atmosphärisch bedingte Fehler der GNSS-Signale herausfiltern zu können. Da diese atmosphärisch bedingten Fehler von der Ortsposition abhängen, ist ein großräumiger Korrekturdatendienst im normalen Fahrbetrieb sehr vorteilhaft.

Vorteilhafterweise kann der Kalibrierprozess derart ausgeführt werden, dass die horizontale und/oder vertikale Orientierung sowie die Position des Fahrzeuges mittels der fahrzeugbezogenen GNSS-Einrichtung des Fahrzeuges während des Bewegens des Fahrzeuges ermittelt wird und die elevations- und azimutabhängigen Fehlerkorrektur der GNSS-Antenne in Abhängigkeit von der jeweiligen, durch die GNSS-Einrichtung des Fahrzeuges ermittelte horizontalen oder vertikalen Orientierung des Fahrzeuges, der ermittelten Position des Fahrzeuges und der entsprechenden Satellitenposition relativ zur GNSS-Antenne durch eine Recheneinheit ermittelt wird.

Nach dem Kalibrierprozess können dann vorteilhafterweise die ermittelten elevations- und azimutabhängigen Fehlerkorrekturen der GNSS-Antenne in einem Fehlerkorrekturspeicher der GNSS-Einrichtung hinterlegt werden, so dass die GNSS-Einrichtung bei der Positionsbestimmung auf diese Fehlerkorrekturen zur Kalibrierung der GNSS-Antenne zurückgreifen kann.

Das beste Ergebnis wird erreicht, wenn eine Referenzstation oder ein Korrekturdienst (mehrere Referenzstationen) bei der Kalibrierung verwendet werden, um die satellitenbedingten Fehler (Fehler durch Satellitenorbits, Satellitenuhren sowie Atmosphäreneinflüsse) aus den empfangenen Signalen herausrechnen zu können, sodass lediglich der antennenbedingte Fehler verbleibt. Demzufolge ist es besonders vorteilhaft, wenn während des Kalibrierprozesses satellitenbedingte Fehler der GNSS-Signale (Satellitenbahnenfehler, Satellitenuhrenfehler, atmosphärisch bedingte Laufzeitfehler) berücksichtigt werden, sodass lediglich antennenbedingte Empfangsfehler in den GNSS-Signalen verbleiben.

Ein Kalibrierprozess kann dabei im Detail wie folgt aussehen. Zu einem bestimmten Zeitpunkt werden zunächst GNSS-Signale von GNSS-Satelliten empfangen, wobei hier vorteilhafterweise GNSS-Signale von mehr als vier Satelliten (n > 4) empfangen werden. Aus diesen empfangenen GNSS-Signalen der einzelnen Satelliten wird nun für jeden Satelliten ein sogenannter Pseudorange ermittelt, der zunächst sowohl satellitenbedingte, atmosphärischbedingte als auch antennenbedingte Ungenauigkeiten enthält.

Im nächsten Schritt wird nun eine Korrektur von satellitenbedingten und atmosphärischbedingten Fehlern an die Pseudoranges angebracht, wobei diese satellitenbedingten und atmosphärischbedingten Fehlerkorrekturen von einer Referenzstation oder einem Korrekturdienst bestehend aus mehreren Referenzstationen ermittelt werden kann.

Im dritten Schritt wird nun die Position (x, y, z) der Antenne zum Empfangszeitpunkt der GNSS-Signale aus diesen Pseudoranges ermittelt. Da mehr als vier Satelliten gleichzeitig empfangen wurden, ist diese Messung überbestimmt, d.h. die Kugeln um die Satelliten schneiden sich nicht exakt in einem Punkt (Pseudoranges), sondern geben einen Lösungsbereich vor. Die beste Lösung kann dann mit einem Ausgleichsverfahren (etwa Gaussian-Least-Squares) bestimmt werden. In dem Falle, dass das Fahrzeug bspw. mit Hilfe einer rotierenden Plattform bewegt wird, könnte der Schritt der Positionsermittlung aus den empfangenen GNSS-Signalen entfallen und stattdessen eine bekannte Position eingeführt werden. Diese bekannte Position kann bspw. durch eine hochgenaue Messung im Vorfeld ermittelt werden, wobei es dann bspw. besonders vorteilhaft ist, wenn das Fahrzeug so mit Hilfe der bewegbaren Plattform bewegt wird, dass sich die Position der Antenne nicht ändert. Dies ist bspw. dann der Fall, wenn das Fahrzeug mit Hilfe einer Plattform um eine Achse gedreht wird, die durch die Antenne verläuft.

Basierend auf der ermittelten oder bereitgestellten bekannten Position kann nun für jeden Satellit eine Abweichung (Residuen, welche den definierten Anteil der Variabilität, der durch das gegebene Modell nicht erklärt werden kann, bezeichnen) bestimmt werden, wobei diese Abweichungen den Antenneneinfluss angeben. Als Grundlage hierfür können wieder die GNSS-Signale oder erneut empfangene GNSS-Signale verwendet werden, wobei auch hier immer mehrere Satellitenmessungen zum gleichen Zeitpunkt notwendig sind, da die Empfängerzeit in jedem Fall ermittelt werden muss.

Bei iterativer Auswertung des Kalibrierungsdatensatzes konvergieren die Korrekturen, sodass sich für jede horizontale und/oder vertikale Orientierung des Fahrzeuges über die gesamte Zeit dann entsprechende elevations- und azimutabhängige Fehlerkorrekturen der GNSS-Antenne ermitteln lassen.

Gemäß Anspruch 8 wird hierfür ein Verfahren zur Bestimmung der Position eines Fahrzeuges mit Hilfe einer GNSS-Einrichtung des Fahrzeuges vorgeschlagen, wobei die GNSS-Einrichtung eine fest in dem Fahrzeug verbaute GNSS-Antenne hat, wobei elevations- und azimutabhängige Fehlerkorrekturen zur Kalibrierung der GNSS-Antenne durch das Verfahren wie vorstehend beschrieben ermittelt und in einem Fehlerkorrekturspeicher der GNSS-Einrichtung hinterlegt sind.

Zur Bestimmung der Position des Fahrzeuges wird zunächst die aktuelle Fahrzeugposition mit Hilfe der GNSS-Einrichtung (in der Regel ohne Korrektur antennenbedingter Fehler) ermittelt sowie die horizontale und/oder vertikale Fahrzeugorientierung. Außerdem wird anhand der Satellitenephemeriden die jeweilige Satellitenposition der Satelliten ermittelt, so dass hieraus die Satellitenwinkel (Höhenwinkel und Horizontalwinkel) in Bezug auf die GNSS-Antenne des Fahrzeuges zu dem jeweiligen Satelliten berechnet werden kann. Anschließend wird aus den berechneten Satellitenwinkeln die betreffende elevations- und azimutabhängige Fehlerkorrektur aus dem Fehlerkorrekturspeicher ermittelt und zur Korrektur der Entfernungsmessung angewendet, so dass der antennenbasierte Fehler eliminiert werden kann.

Die Orientierung des Fahrzeuges kann dabei entweder durch zusätzliche Sensoren (wie etwa Kreiselkompass oder zweiter GNSS-Empfänger) ermittelt werden oder durch ein Fahrzeugbewegungsmodell, wobei für Straßen- oder Schienenfahrzeuge die Annahme ausreicht, dass das Fahrzeug in Richtung des Geschwindigkeitsvektors orientiert ist. Die elevations- und azimutabhängige Fehlerkorrektur kann dabei bei der Phasenmessung und/oder Codemessung angewendet werden.

Die Erfindung wird anhand der beigefügten Figur beispielhaft näher erläutert. Es zeigt:

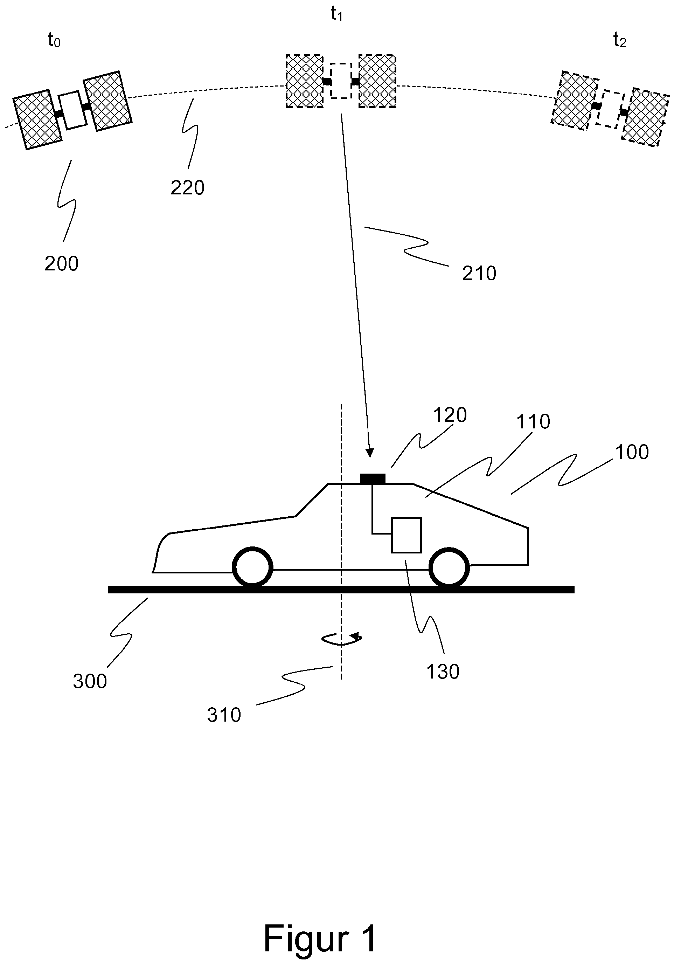

- Figur 1: - beispielhafte Darstellung des erfindungsgemäßen Verfahrens.

Figur 1 zeigt ein Fahrzeug 100, das eine GNSS-Einrichtung 110 mit einer GNSS-Antenne 120 und einer Recheneinheit 130 hat.

Die GNSS-Antenne 120 ist dabei fest an dem Fahrzeug 100 angeordnet und ist bezüglich des Fahrzeuges nicht beweglich. Nur in Verbindung mit einer Bewegung des Fahrzeuges 100 ist die Antenne 120 gegenüber anderen Objekten außerhalb des Fahrzeuges 100 bewegbar.

Die Antenne 120 ist dabei ausgebildet, die von einem Satelliten 200 ausgesendeten GNSS-Signale 210 zu empfangen, wobei die Recheneinheit 130 der GNSS-Einrichtung 110 des Fahrzeuges 100 ausgebildet ist, basierend auf den empfangenen Signalen 210 dann eine Entfernungsmessung zu dem Satelliten 200 durchzuführen und basierend auf diese Entfernungsmessung dann die Position des Fahrzeuges 100 auf der Erdkugel zu ermitteln.

Das Fahrzeug 100 befindet sich zum Zwecke der Kalibrierung der Antenne 120 auf einer bewegbaren Plattform 300, die um eine Achse 310 drehbar ist. Das auf der drehbaren Plattform 300 festangeordnete Fahrzeug 100 würde sich somit bei einer Drehbewegung der Plattform 300 um die Achse 310 ebenfalls mit um die Achse drehen, so dass das Fahrzeug eine Drehbewegung ausführt, bei der sich fortwährend die horizontale Orientierung des Fahrzeuges 100 ändert. Im Ausführungsbeispiel der Figur 1 ändert sich dabei die vertikale Orientierung des Fahrzeuges gegenüber der Erdoberfläche nicht.

Im Beispiel der Figur 1 ist aus Gründen der Übersichtlichkeit lediglich ein Satellit 200 gezeigt, der entsprechende Positionssignale 210 zur Bestimmung der Position des Fahrzeuges 100 aussendet. In der Praxis sind jedoch mehr als ein Satellit 200 empfangbar, um durch entsprechende Triangulation die Position des Fahrzeuges zu bestimmen.

Der dargestellte Satellit 200 befindet sich dabei auf einer Umlaufbahn 220, wobei der Satellit zum Zeitpunkt to eine erste Position auf der Umlaufbahn 220 einnimmt, zum Zeitpunkt t₁ eine gegenüber dem Zeitpunkt to veränderte Position auf der Umlaufbahn 220 und zu einem letzten Zeitpunkt t₂ eine weitere Position auf der Umlaufbahn 220 einnimmt.

Soll die Antenne 120 zusammen mit dem Fahrzeug 100 kalibriert werden, so wird das Fahrzeug 100 zunächst auf der Plattform 300 angeordnet und um die Achse 310 gedreht. Während dieser Zeit ändert sich stetig die horizontale Orientierung des Fahrzeuges, so dass sich kontinuierlich der zwischen der Antenne 120 und dem Satelliten 200 aufgespannte Horizontalwinkel ändert. Wird das Fahrzeug nun über mehrere Stunden mit Hilfe der Plattform 300 um die Achse 310 gedreht, so bewegt sich der Satellit auf seiner Umlaufbahn 220 von der Position zum Zeitpunkt to bis zur Position zum Zeitpunkt t₂, wodurch sich auch kontinuierlich der Höhenwinkel zwischen der Antenne 120 und dem Satelliten 200 über die Zeit ändert. Zusammen mit der Drehbewegung ergeben sich somit über die Zeit fortlaufende Änderungen der Höhen- und Horizontalwinkel, so dass für verschiedene Kombinationen von Horizontal- und Höhenwinkel jeweils Kalibriermessungen basierend auf den für entsprechenden Winkel empfangenen GNSS-Signale zur Kalibrierung der Antenne durchgeführt werden können.

Für unterschiedliche horizontale und/oder vertikale Orientierungen werden dabei jeweils eine elevations- und azimutabhängige Fehlerkorrektur der GNSS-Antenne in Abhängigkeit der jeweiligen horizontalen und/oder vertikalen Orientierung des Fahrzeuges und einer Satellitenposition relativ zur GNSS-Antenne 120 durch die Recheneinheit 130 ermittelt, so dass am Ende des Kalibrierprozesses für eine Vielzahl von Kombinationen von Höhen- und Horizontalwinkeln mindestens jeweils eine elevations- und azimutabhängige Fehlerkorrektur für die GNSS-Antenne vorliegt.

Für die Kalibrierung der GNSS-Antenne 120 ist es dabei sehr vorteilhaft, wenn GNSS-Signale von mehreren Satelliten, vorzugsweise mehr als vier Satelliten, empfangen werden.

Basierend auf dem Ausführungsbeispiel der Figur 1 kann die Ermittlung der elevations- und azimutabhängigen Fehlerkorrektur dadurch geschehen, dass die Position der Antenne sowie die Position des Satelliten auf seiner Umlaufbahn 220 bekannt ist, so dass zu jedem Zeitpunkt die konkrete Entfernung zwischen Satellit 210 und Antenne 120 ohne jedwede Fehler ermittelbar ist. Aus der Abweichung der normierten Entfernung in Bezug zu der gemessenen Entfernung im konkreten Fall lässt sich dann für jeden Horizontal- und Höhenwinkel ein Antennenfehler über die Zeit feststellen.

Denkbar ist aber auch, dass das Fahrzeug relativ zu einer lokalen Referenzstation entsprechende Figuren fährt, wobei die Fehlerermittlung dann auch unter Zuhilfenahme der relativen Position zu der Referenzstation ermittelt wird.

### Bezugszeichenliste

- 100: Fahrzeug
- 110: GNSS-Einrichtung
- 120: GNSS-Antenne
- 130: Recheneinheit
- 200: GNSS-Satellit
- 210: GNSS-Signal
- 220: Umlaufbahn
- 300: bewegbare Plattform
- 310: Drehachse

AI/sb

## Patentansprüche

1. Verfahren zum Kalibrieren einer GNSS-Antenne eines Fahrzeuges, **gekennzeichnet durch** die Schritte:
- Bereitstellen eines Fahrzeuges, welches eine fahrzeugseitige GNSS-Einrichtung mit einer in dem Fahrzeug fest eingebauten GNSS-Antenne zum Empfang von GNSS-Signalen eines GNSS-Satelliten aufweist, und
- Durchführen eines Kalibrierprozesses zum Kalibrieren der in dem Fahrzeug fest eingebauten GNSS-Antenne, wobei während des Kalibrierprozesses das Fahrzeug bewegt wird, so dass sich die horizontale und/oder vertikale Orientierung des Fahrzeuges ändert, und für unterschiedliche horizontale und/oder vertikale Orientierungen des Fahrzeuges jeweils eine elevations- und azimutabhängige Fehlerkorrektur der GNSS-Antenne in Abhängigkeit von in der jeweiligen horizontalen und/oder vertikalen Orientierung des Fahrzeuges empfangenen GNSS-Signalen eines GNSS-Satelliten durch eine Recheneinheit berechnet wird, um einen antennenbedingten elevations- und azimutabhängigen Fehler bei der GNSS-Positionsermittlung korrigieren zu können.

2. Verfahren nach Anspruch 1, **dadurch gekennzeichnet, dass** durch die Recheneinheit eine elevations- und azimutabhängige Fehlerkorrektur für die Phasenmessung und/oder Codemessung bei der GNSS-Positionsermittlung berechnet wird.

3. Verfahren nach Anspruch 1 oder 2, **dadurch gekennzeichnet, dass** das Fahrzeug auf einer bewegbaren Plattform fest positioniert und dann mittels der bewegbaren Plattform bewegt wird, um die horizontale und/oder vertikale Orientierung des Fahrzeuges zu ändern.

4. Verfahren nach Anspruch 1 oder 2, **dadurch gekennzeichnet, dass** zum Bewegen des Fahrzeuges dieses entlang eines vorbestimmten Pfades bewegt wird.

5. Verfahren nach Anspruch 1 oder 2, **dadurch gekennzeichnet, dass** zum Bewegen des Fahrzeuges dieses entlang eines unbestimmten Pfades bewegt wird.

6. Verfahren nach einem der vorhergehenden Ansprüche, **dadurch gekennzeichnet, dass** die horizontale und/oder vertikale Orientierung sowie ggf. die Position des Fahrzeuges mittels der fahrzeugbezogenen GNSS-Einrichtung des Fahrzeuges während des Bewegens des Fahrzeuges ermittelt wird und die elevations- und azimutabhängige Fehlerkorrektur der GNSS-Antenne in Abhängigkeit von der jeweiligen, durch die GNSS-Einrichtung des Fahrzeuges ermittelte horizontalen und/oder vertikalen Orientierung des Fahrzeuges, ggf. der ermittelten Position des Fahrzeuges und der Satellitenposition relativ zur GNSS-Antenne durch eine Recheneinheit ermittelt wird.

7. Verfahren nach einem der vorhergehenden Ansprüche, **dadurch gekennzeichnet, dass** atmosphärisch bedingte Fehlerkorrekturen durch einen Korrekturdatendienst für die aktuelle Position des Fahrzeuges ermittelt und bei der Kalibrierung der GNSS-Antenne berücksichtigt werden.

8. Verfahren zur Bestimmung der Position eines Fahrzeuges mittels einer GNSS-Einrichtung des Fahrzeuges, die eine fest in dem Fahrzeug verbaute GNSS-Antenne hat, wobei elevations- und azimutabhängige Fehlerkorrekturen zur Kalibrierung der GNSS-Antenne durch das Verfahren nach einem der vorhergehenden Ansprüche ermittelt und in einem elektronischen Fehlerkorrekturspeicher abgelegt sind, mit den Schritten:
- Ermitteln der aktuellen Fahrzeugposition, der horizontalen und/oder vertikalen Fahrzeugorientierung und der Satellitenposition eines Satelliten,
- Berechnen von Satellitenwinkeln in Bezug zu der GNSS-Antenne des Fahrzeuges in Abhängigkeit von der aktuellen Fahrzeugposition, der horizontalen und/oder vertikalen Fahrzeugorientierung und der jeweiligen Satellitenposition des Satelliten,
- Ermitteln einer Fehlerkorrektur aus den elevations- und azimutabhängige Fehlerkorrekturen in Abhängigkeit von den berechneten Satellitenwinkeln und
- Korrigieren der Entfernungsmessung bei der GNSS-Positionsbestimmung des Fahrzeuges mittels der ermittelten Fehlerkorrektur.

9. Verfahren nach Anspruch 8, **dadurch gekennzeichnet, dass** die Phasenmessung und/oder die Codemessung zur Korrektur der Entfernungsmessung mittels der ermittelten Fehlerkorrektur korrigiert wird.

10. GNSS-Einrichtung zur Positionsbestimmung eines Fahrzeuges mit einer GNSS-Antenne und einem elektronischen Fehlerkorrekturspeicher, der elevations- und azimutabhängige Fehlerkorrekturen zur Kalibrierung der GNSS-Antenne erzeugt mit dem Verfahren nach einem der Ansprüche 1 bis 7 enthält, wobei die GNSS-Einrichtung zur Positionsbestimmung des Fahrzeuges gemäß dem Verfahren nach einem der Ansprüche 8 oder 9 ausgebildet ist.
